# EUROPÄISCHE PATENTSCHRIFT

(11) **EP 3 119 035 B1**
(45) Veröffentlichungstag und Bekanntmachung des Hinweises auf die Patenterteilung: **26.12.2018**
(21) Anmeldenummer: 16171062.9
(22) Anmeldetag: 24.05.2016
(51) Int. Cl.: H04L 12/24, G06K 9/62

(54) **VERFAHREN ZUM ÜBERPRÜFEN VON NETZWERKEINRICHTUNGEN UND NETZWERK**
METHOD FOR THE INSPECTION OF NETWORK FACILITIES AND NETWORK
PROCÉDÉ DE VÉRIFICATION DE DISPOSITIFS RÉSEAUX ET RÉSEAU

(30) Priorität: 17.07.2015 DE 102015213463
(43) Veröffentlichungstag der Anmeldung: 18.01.2017
(73) Patentinhaber: Siemens Aktiengesellschaft, 80333 München (DE)
(72) Erfinder: Vamos, Benedikt, 85579 Neubiberg (DE); Kirchner, Michael, 81737 München (DE)

(56) Entgegenhaltungen:
- EP-A2- 1 426 882
- US-A1- 2006 136 417
- US-A1- 2010 290 601
- CHAOMEI CHEN ED - BERNSTEIN M ET AL: "Structuring and visualising the WWW by generalised similarity analysis", HYPERTEXT '97: 8TH. ACM CONFERENCE ON HYPERTEXT. SOUTHAMPTON, APR. 6 - 11, 1997; [ACM CONFERENCE ON HYPERTEXT], NEW YORK, ACM, US, 15. April 1997 (1997-04-15), Seiten 177-186, XP058172761, DOI: 10.1145/267437.267456 ISBN: 978-0-89791-866-4

## Beschreibung

Die vorliegende Erfindung betrifft ein Verfahren zum Überprüfen von Netzwerkeinrichtungen in einem Netzwerk und ein Netzwerk.

Im Rahmen einer Sicherheitsanalyse oder einer Inventur wird häufig die Infrastruktur eines Netzwerks, insbesondere Netzwerkeinrichtungen des Netzwerks, untersucht. Je nach Eigenschaften und Typ der Netzwerkeinrichtungen wird man dabei mit mehreren verschiedenen Webinterfaces, grafische Benutzerschnittstellen der jeweiligen Netzwerkeinrichtungen, konfrontiert.

Gewöhnlich erfolgt das Überprüfen der Netzwerkeinrichtungen durch ein manuelles Abrufen der einzelnen Webinterfaces. Ein Großteil der Webinterfaces ist jedoch für eine Sicherheitsanalyse oder Inventur nicht von Belang, so dass deren Abrufen, Laden und Anzeigen in einer Anzeigeeinrichtung, z.B. auf einem Bildschirm, einen Verlust von Zeit, Kosten und Aufwand darstellt.

Aus der US 2006/0136417 A1 ist ein Verfahren zum Analysieren von Daten, wie beispielsweise Texte, Bilder, Audio- und Videodaten, bekannt. Dabei werden Darstellungen erzeugt, die ein Benutzer betrachten kann und welche ein Analyseergebnis, wie beispielsweise Ähnlichkeiten oder Unterschiede von verschiedenen Datensätzen darstellen.

Die EP 1 426 882 A2 zeigt eine Möglichkeit, aus einer großen Datenmenge Ähnlichkeiten von unterschiedlichen Datensätzen darzustellen. Dabei wird beispielsweise eine Karte erzeugt, in der ähnliche Daten nahe beieinander repräsentiert werden. Die US 2010/0290601 A1 beschreibt ein Verfahren, um in Netzwerken, in denen eine große Anzahl an Nachrichten ausgetauscht werden, das Verhalten sowie die Stabilität des Netzwerks mittels einer Analyse von den Nachrichten beigefügten Log-Daten.

In "Structuring and Visualising the WWW by Generalised Similarity Analysis" von Chaomei Chen, veröffentlicht 1997, wird ein generischer Ansatz beschrieben, wie ein Hypertextbasierter Raum im Internet strukturiert und visualisiert werden kann.

Vor diesem Hintergrund besteht eine Aufgabe der vorliegenden Erfindung darin, das Überprüfen von Netzwerkeinrichtungen in einem Netzwerk zu verbessern.

Demgemäß wird ein Verfahren zum Anzeigen grafischer Darstellungen von Webinterfaces von Netzwerkeinrichtungen in einem Netzwerk auf einem Bildschirm vorgeschlagen. Die Netzwerkeinrichtungen sind mit Hilfe des jeweiligen Webinterfaces, welches eine grafische Benutzeroberfläche darstellt, ansteuerbar und weisen eine jeweilige Netzwerkadresse auf. Das Verfahren umfasst die Schritte:
Abrufen der Webinterfaces mit Hilfe der Netzwerkadressen;
Erzeugen eines Bilddatensatzes für jedes abgerufene Webinterface, wobei der Bilddatensatz die grafische Darstellung des Webinterfaces in einer Anzeigeeinrichtung umfasst;
Ordnen der abgerufenen Webinterfaces in Gruppen, wobei die grafischen Darstellungen der jeweiligen Gruppe zugeordneten Webinterfaces in der Anzeigeeinrichtung ein grafisches Ähnlichkeitsmaß aufweisen, wobei das grafische Ähnlichkeitsmaß angibt, wie viele Gemeinsamkeiten die grafische Darstellung eines bestimmten Webinterfaces mit den grafischen Darstellungen von anderen Webinterfaces aufweist und das grafische Ähnlichkeitsmaß mit Hilfe des jeweiligen Bilddatensatzes ermittelt wird, und wobei die abgerufenen Webinterfaces in eine gemeinsame Gruppe zugeordnet werden, wenn ihr grafisches Ähnlichkeitsmaß einen vorgegebenen Schwellwert übersteigt; und
Anzeigen der grafischen Darstellung der Webinterfaces mindestens einer der Gruppen auf dem Bildschirm mit einer Bildschirmfläche.

Die grafischen Darstellungen der Webinterfaces werden derart verkleinert angezeigt, dass die grafischen Darstellungen der Webinterfaces einer Gruppe innerhalb der Bildschirmfläche auf dem Bildschirm zusammen angezeigt werden.

Es handelt sich insbesondere um mehrere verschiedene Netzwerkeinrichtungen, die jeweils eine Netzwerkadresse haben. Insofern kann man von einem Verfahren zum Überprüfen von mehreren unterschiedlichen Netzwerkeinrichtungen in einem Netzwerk sprechen. Die Netzwerkeinrichtungen haben daher auch verschiedene Netzwerkadressen.

Optional umfasst das vorgeschlagene Verfahren ferner den Schritt:
Überprüfen der Netzwerkeinrichtungen mit Hilfe der angezeigten grafischen Darstellung der den Netzwerkeinrichtungen zugehörigen Webinterfaces.

Die Netzwerkeinrichtungen sind mindestens teilweise derart miteinander vernetzt, d.h. gekoppelt und/oder elektrisch verbunden, dass sie Informationen, Befehle und/oder Daten aneinander übertragen können. Vorzugsweise können die Netzwerkeinrichtungen elektrische Signale aktiv und/oder passiv verarbeiten, d.h. die Netzwerkeinrichtungen können aktive Netzwerkkomponenten umfassen. Die Netzwerkeinrichtungen sind vorzugsweise mit einer Stromversorgung verbunden, die sie mit einer für einen ordnungsgemäßen Betrieb nötigen elektrischen Leistung versorgt.

Die Netzwerkeinrichtungen können autonome Systeme, z.B. Rechner, Drucker, Kontrolleinheiten, Feldgeräte und dergleichen, umfassen. Insbesondere umfassen die Netzwerkeinrichtungen Geräte, Maschinen und/oder elektrische Systeme, die mindestens teilweise automatisiert sind, d.h. keinen oder einen reduzierten menschlichen Eingriff für ihren Betrieb benötigen. Die Netzwerkeinrichtungen können Teil eines autonomen Systems, z.B. eines Rechners, sein.

Insbesondere sind die Netzwerkeinrichtungen eingerichtet, mit Hilfe eines netzwerkinternen Netzwerkprotokolls Daten zu übertragen. Das Netzwerkprotokoll kann TCP/IP, UDP, IPX/SPX, NetBEUI, AppleTalk, BACnet, usw. umfassen. Insbesondere umfasst das Netzwerkprotokoll HTTP, UDS, FTP, SMTP, POP, Telnet, OPC UA, SOCKS, TCP, UDP, SCTP, IP, ICMP, Ethernet, Token Bus, Token Ring, FDDI und/oder IPoAC. Insbesondere sind die Netzwerkadressen IP-Adressen der Netzwerkeinrichtungen.

Das Webinterface bezieht sich insbesondere auf eine Schnittstelle, vorzugsweise eine grafische Benutzerschnittstelle, zu einer Netzwerkeinrichtung. Mit Hilfe des Webinterfaces können insbesondere Funktionen der jeweiligen Netzwerkeinrichtung ausgeführt und/oder auf die Funktionen zugegriffen werden. Das Webinterface kann insbesondere über das Hypertext Transfer Protocol (HTTP) abgerufen werden. Das Webinterface kann insbesondere eine grafische Benutzeroberfläche (Graphical User Interface, GUI) und/oder einen Webservice umfassen.

Die grafische Benutzeroberfläche wird vorzugsweise mit Hilfe einer Anzeigeeinrichtung grafisch auf einem Bildschirm dargestellt. Die Anzeigeeinrichtung bezieht sich insbesondere auf ein Fenster und/oder eine Browsereinrichtung, die auf einem Bildschirm angezeigt werden können. Ferner kann sich die Anzeigeeinrichtung auf eine bildgebende Umgebung in einer Recheneinheit beziehen, die mit Hilfe von Quellcodes, welche von der jeweiligen Netzwerkeinrichtung zur Verfügung gestellt werden, die grafische Darstellung des Webinterfaces wiedergeben kann. Der Bildschirm kann sich dabei auf irgendeine elektronische Einrichtung beziehen, die ein elektronisches Signal optisch darstellen kann. Beispielsweise umfasst der Bildschirm einen Monitor, eine Displayeinrichtung, eine Projektionseinrichtung oder ein sonstiges elektrisches Anzeigegerät. Die grafische Benutzeroberfläche ermöglicht insbesondere eine Wechselwirkung mit der jeweiligen Netzwerkeinrichtung, z.B. Eingabe von Befehlen, Abrufen von Informationen, Ändern oder Einstellen von Konfiguration und Modifikationen.

Mit Hilfe des Webservices können die Netzwerkeinrichtungen miteinander kommunizieren, z.B. Daten oder Funktionen einander zur Verfügung stellen. Ein Beispiel für ein Webinterface ist ein integrierter Webserver einer Netzwerkeinrichtung, über den der Benutzer Änderungen an der Konfiguration der Netzwerkeinrichtung vornehmen kann. Das Webinterface ist vorzugsweise plattformunabhängig, d.h. unabhängig von einem Betriebssystem der jeweiligen Netzwerkeinrichtung.

Über das Webinterface kann die Netzwerkeinrichtung angesteuert, betrieben, modifiziert und/oder konfiguriert werden. Das Webinterface umfasst insbesondere eine grafische Darstellung in einer Anzeigeeinrichtung. Die grafische Darstellung kann Textelemente (z.B. Zeichen und Zahlen), Bilder, Farben, Farbkombinationen, Hyperlinks und/oder Markierungen enthalten. Insbesondere kann das Webinterface markierte Flächen für eine Eingabe von Befehlen für die Netzwerkeinrichtung umfassen. Die Textelemente können Informationen, z.B. eine Versionsnummer einer Firmware, über die jeweilige Netzwerkeinrichtung wiedergeben.

Vorzugsweise weist jede Netzwerkeinrichtung des Netzwerks eine ihr zugeordnete Netzwerkadresse auf. Vorzugsweise erfolgt die Zuordnung der Netzwerkadressen zu den Netzwerkeinrichtungen eindeutig, d.h. eine Netzwerkeinrichtung kann höchstens eine Netzwerkadresse aufweisen, und eine Netzwerkadresse kann höchstens einer Netzwerkeinrichtung zugeordnet sein. Vorzugsweise ist die Netzwerkadresse für eine eindeutige Identifizierung der jeweiligen Netzwerkeinrichtung geeignet. Es ist denkbar, dass die Netzwerkadresse, die einer bestimmten Netzwerkeinrichtung zugeordnet ist, wieder freigegeben werden kann, indem eine weitere Netzwerkadresse der bestimmten Netzwerkeinrichtung zugeordnet wird.

Mit Hilfe der Netzwerkadressen können die Netzwerkeinrichtungen angesprochen werden, und als Antwort kann das Webinterface der jeweiligen Netzwerkeinrichtung wiedergegeben werden. Die Netzwerkadressen können in Form einer Tabelle vorliegen. Alternativ oder zusätzlich kann eine Recheneinheit und/oder Servereinrichtung, die mit dem Netzwerk gekoppelt sind, eine Tabelle mit den Netzwerkeinrichtungen und den jeweiligen zugeordneten Netzwerkadressen bereitstellen.

Vorzugsweise sind die Webinterfaces in einer Anzeigeeinrichtung grafisch darstellbar. Die grafische Darstellung des einzelnen Webinterfaces kann in Form des jeweiligen Bilddatensatzes elektronisch gespeichert werden. Vorzugsweise kann mit Hilfe des gespeicherten Bilddatensatzes die grafische Darstellung des jeweiligen Webinterfaces generiert werden. Ein Bilddatensatz ist insbesondere eine elektronische Datei und/oder bezieht sich auf einen Inhalt in einer elektronischen Datei. Beispielsweise kann die grafische Darstellung des jeweiligen Webinterfaces anhand von Farbwerten, z.B. in einem CMYK-Farbraum, RGB-Farbraum oder Lab-Farbraum, generiert werden, die jedem Punkt, z.B. einem Pixel, einer Bildschirms und/oder einer Anzeigeeinrichtung auf einem Bildschirm zugeordnet sind. Der Bilddatensatz kann dementsprechend die den Bildpunkten zugeordneten Farbwerte umfassen. Der Bilddatensatz ist beispielsweise mit Hilfe einer beschreibenden Sprache, z.B. HTML, generiert und/oder gespeichert. Die grafische Darstellung des Webinterfaces kann basierend auf dem jeweiligen Bilddatensatz generiert werden. Dabei kann die grafische Darstellung von einer Servereinrichtung, einer Netzwerkeinrichtung und/oder einer Recheneinheit generiert werden.

Das grafische Ähnlichkeitsmaß gibt erfindungsgemäß an, wie viele Gemeinsamkeiten die grafische Darstellung eines bestimmten Webinterfaces mit den grafischen Darstellungen von anderen Webinterfaces aufweist. Das grafische Ähnlichkeitsmaß kann eine absolute oder relationale Größe sein und z.B. einen Skalar, einen Vektor, eine Matrix und/oder ein Array aufweisen. Beispielsweise kann ein Korrelationsparameter und/oder ein Proximitätsmaß der Webinterfaces ausgerechnet werden, der Gemeinsamkeiten der grafischen Darstellungen von jeweils zwei Webinterfaces mathematisch erfasst und als eine eindimensionale Größe wiedergibt. Insbesondere erfolgt das Ermitteln des grafischen Ähnlichkeitsmaßes, indem der Bilddatensatz der einzelnen Webinterfaces ausgewertet wird.
Vorzugsweise wird zum Ermitteln des grafischen Ähnlichkeitsmaßes und/oder zum Ordnen der Webinterfaces in Gruppen ein Image Clustering Verfahren und/oder eine Clusteranalyse durchgeführt. Beispielsweise wird ein "Structural Similarity Index" (SSIM), ein "Mean Squared Error" (MSE), ein "K-Means", ein "C-Means" und/oder eine "Gaussian Maximum Likelihood Classficiation" (GMLC) angewendet, um die Bilddatensätze der abgerufenen Webinterfaces zu gruppieren (d.h. "clustern"), und somit die abgerufenen Webinterfaces in Gruppen zu ordnen. Das grafische Ähnlichkeitsmaß kann mit Hilfe eines pixelorientierten, katenorientierten, regionenorientierten, modellbasierten und/oder texturorientierten Verfahrens oder einer Kombination hiervon bestimmt werden.
Eine Ähnlichkeit von Webinterfaces wird durch das grafische Ähnlichkeitsmaß der jeweiligen grafischen Darstellungen der entsprechenden Webinterfaces bestimmt. Die abgerufenen Webinterfaces werden in eine gemeinsame Gruppe zugeordnet, wenn ihr grafisches Ähnlichkeitsmaß einen vorgegebenen Schwellwert übersteigt. Eine Gruppe von Webinterfaces kann auf bestimmte Eigenschaften der Netzwerkeinrichtungen, die die Webinterfaces der Gruppe von Webinterfaces aufweisen, hinweisen.

Das Anzeigen der grafischen Darstellungen der Webinterfaces kann in einer Anzeigeeinrichtung, z.B. einem Fenster oder einer Browsereinrichtung, auf dem Bildschirm erfolgen. Die Bildschirmfläche des Bildschirms weist vorgegebene Bildschirmabmessungen auf, die durch eine Angabe von Pixelzahlen für jede Richtung, z.B. Höhe x Breite, definiert sein können.

Die grafischen Darstellungen der in Gruppen ordneten Webinterfaces können jeweils Bildabmessungen aufweisen, die um ein Vielfaches kleiner als die Bildschirmabmessungen der Bildschirmfläche sind. Dadurch können mehrere grafische Darstellungen gleichzeitig auf dem Bildschirm angezeigt werden. Die grafischen Darstellungen der Webinterfaces, die einer gemeinsamen Gruppe zugeordnet sind, können gleiche oder unterschiedliche Bildabmessungen aufweisen.

Durch das vorgeschlagene Verfahren werden die grafischen Darstellungen der Webinterfaces derart auf dem Bildschirm dargestellt, so dass die grafischen Darstellungen von ähnlichen Webinterfaces gruppiert angezeigt werden können. Dadurch kann beispielsweise ein so genanntes "False-Positive", d.h. ein Webinterface, das fälschlicherweise der Gruppe zugeordnet ist, schneller identifiziert werden, als dass die grafischen Darstellungen einzeln überprüft werden müssen. Zudem wird die Wiedergabe der grafischen Darstellungen der abgerufenen Webinterfaces beschleunigt, da die Webinterfaces nicht einzeln zur Anzeige auf dem Bildschirm geladen werden, sondern lediglich ihre grafischen Darstellungen basierend auf dem jeweiligen Bilddatensatz wiedergegeben werden. Ferner kann eine Ladezeit, die zum Übertragen von Daten zum Erzeugen der jeweiligen grafischen Darstellung der abgerufenen Webinterfaces erforderlich ist, eingespart werden.

Gemäß einer Ausführungsform werden die grafischen Darstellungen der Webinterfaces, die verschiedenen Gruppen zugeordnet sind, in der Anzeigeeinrichtung in Abhängigkeit von dem Ähnlichkeitsmaß voneinander beabstandet angezeigt.

Die grafischen Darstellungen von Webinterfaces, die aufgrund ihrer Ähnlichkeit basierend auf dem Ähnlichkeitsmaß einer gemeinsamen Gruppe zugeordnet sind, werden vorzugsweise gruppiert auf dem Bildschirm dargestellt. Ferner können die grafischen Darstellungen der abgerufenen Webinterfaces, die ähnlich zueinander und verschiedenen Gruppen von Webinterfaces zugeordnet sind, nahe beieinander angeordnet auf dem Bildschirm angezeigt werden. Entsprechend können die grafischen Darstellungen von zwei Gruppen von Webinterfaces, die sich wenig ähnlich sind, weit voneinander entfernt angeordnet werden.

Dabei kann sich der Begriff "ähnlich" auf das Ähnlichkeitsmaß der grafischen Darstellungen von Webinterfaces beziehen, das einen vorgegebenen Schwellwert übersteigt.

Dadurch wird ein schnelleres Erfassen von ähnlichen grafischen Darstellungen von Webinterfaces ermöglicht, ohne dass ein einzelnes Abrufen der Webinterfaces nötig ist. Dadurch können Netzwerkeinrichtungen, die für eine Überprüfung irrelevant sind oder besondere Aufmerksamkeit erfordern, schneller erfasst werden.

Gemäß einer weiteren Ausführungsform werden die grafischen Darstellungen der Webinterfaces auf dem Bildschirm mit einem jeweiligen Hyperlink versehen, mittels welchem das jeweilige Webinterface abrufbar ist.

Wenn eine Unregelmäßigkeit, eine Sicherheitslücke, ein potenzielles Risiko und/oder ein Überprüfungsbedarf bei einer oder mehreren grafischen Darstellungen der Webinterfaces festgestellt werden, kann mit Hilfe des jeweiligen Hyperlinks schnell auf die jeweilige Netzwerkeinrichtung zugegriffen werden. Die Hyperlinks können insbesondere mit Hilfe einer Netzwerkadressen-Liste bereitgestellt sein. Dadurch wird ein schnelles Zugreifen auf die jeweilige Netzwerkeinrichtung, die überprüft werden soll, ermöglicht.

Gemäß einer weiteren Ausführungsform umfasst das Netzwerk ein Rechnernetz, ein Intranet und/oder ein Internet mit einem Netzwerkprotokoll.

Das Netzwerk umfasst mehrere miteinander vernetzte Netzwerkeinrichtungen. Eine Anzahl von Netzwerkeinrichtungen in einem Netzwerk beträgt mindestens zwei, und ist vorzugsweise nicht begrenzt. Beispielsweise kann das Netzwerk mindestens einen Teil des Internets umfassen. In einem weiteren Beispiel kann das Netzwerk ein internes Netz, d.h. das Intranet, eines Unternehmens umfassen.

Gemäß einer weiteren Ausführungsform umfassen die Netzwerkeinrichtungen Maschinen, Geräte, EDV-Einrichtungen, Rechner, Drucker, Servereinrichtungen, Router, Switches, Bridges, Firewalls und/oder Session Border Controllers.

Die Netzwerkeinrichtungen können Teil eines Rechnernetzes sein. Die Netzwerkeinrichtungen können aktive und/oder passive Netzwerkkomponenten umfassen. Vorzugsweise können die Netzwerkeinrichtungen Informationen aus einem empfangenen und/oder gemessenen elektrischen Signal extrahieren. Ferner können die Netzwerkeinrichtungen vorzugsweise Informationen für eine Übertragung von einer Informationsquelle zu einem Informationsverbraucher vorbereiten.

Gemäß einer weiteren Ausführungsform weist das Netzwerk ferner zumindest eine weitere Netzwerkeinrichtung ohne jeweiliges Webinterface auf.

Das Netzwerk kann Netzwerkeinrichtungen umfassen, die mit anderen Netzwerkeinrichtungen des Netzwerks vernetzt sind, und kein zugeordnetes Webinterface aufweisen. Beim Ansprechen der Netzwerkeinrichtungen ohne zugeordnetes Webinterface kann eine Fehlermeldung wiedergegeben werden, die in Form eines Bilddatensatzes gespeichert werden kann, und deren grafische Darstellung auf dem Bildschirm angezeigt werden kann. Alternativ oder zusätzlich kann eine Liste von Netzwerkeinrichtungen ohne zugeordnetes Webinterface erstellt werden.

Gemäß einer weiteren Ausführungsform wird der jeweilige Bilddatensatz in einem Bitmap-Format gespeichert.

Insbesondere wird der jeweilige Bilddatensatz als eine Rastergrafik gespeichert. Das Bitmap-Format umfasst eine rasterförmige Anordnung von Pixeln, d.h. Bildpunkten, denen jeweils, wie oben beschrieben, Farbwerte zugeordnet sind. Das Bitmap-Format umfasst insbesondere die Bildabmessungen und die Farbwerte des jeweiligen Bilddatensatzes. Beispielsweise wird der jeweilige Bilddatensatz in einem APX-, BMP-, GBR-, GIF-, JPEG-, PBM-, PGF-, PGM-, PNG-, PPM-, TIFF-, XBM- und/oder XCF-Format erzeugt und/oder gespeichert.

Alternativ oder zusätzlich kann der jeweilige Bilddatensatz als Vektorgrafik gespeichert werden.

Gemäß einer weiteren Ausführungsform umfasst das Verfahren ferner den Schritt:
Ausführen eines Mustererkennungsverfahrens mit den grafischen Darstellungen der Webinterfaces.

Das Mustererkennungsverfahren kann insbesondere Regelmäßigkeiten, Wiederholungen, Ähnlichkeiten und/oder Gesetzmäßigkeiten in den grafischen Darstellungen der abgerufenen Webinterfaces erkennen. Das Mustererkennungsverfahren ist insbesondere geeignet, das Ähnlichkeitsmaß der grafischen Darstellungen der Webinterfaces zu ermitteln.

Dadurch kann das Überprüfen der grafischen Darstellungen der abgerufenen Webinterfaces automatisiert und schnell erfolgen.

Gemäß einer weiteren Ausführungsform werden die Gruppen von Webinterfaces mit Hilfe einer Verfärbung gegenüber einer Hintergrundfarbe und/oder Umrandung auf dem Bildschirm gekennzeichnet.

Die Bildschirmfläche des Bildschirms kann eine einheitliche Hintergrundfarbe aufweisen. Die Gruppen von Webinterfaces können beispielsweise mit einer Farbe unterlegt sein, die sich von der Hintergrundfarbe des Bildschirms unterscheidet.

Alternativ oder zusätzlich können die Gruppen von Webinterfaces mit einer Linie oder Sonstigem umrandet sein. Auf diese Weise können die Gruppen von Webinterfaces in den grafischen Darstellungen visuell kenntlich gemacht werden.

Eine jeweilige Größe der Umrandung und/oder eines verfärbten Bereichs einer Gruppe von Webinterfaces kann in Abhängigkeit von einer Anzahl von Webinterfaces in der Gruppe von Webinterfaces variiert werden. Beispielsweise nimmt die Größe der Umrandung und/oder des verfärbten Bereichs einer Gruppe zu, wenn die Anzahl von Webinterfaces in dieser Gruppe wächst.

Beispielsweise weist der Bildschirm eine schwarze Hintergrundfarbe auf, während die Gruppen von Webinterfaces umrandet sind und eine Fläche innerhalb einer Umrandung um jede Gruppe von Webinterfaces weiß ist. Die Umrandung kann in Form einer schwarzen, weißen oder farbigen Linie ausgebildet sein.

Gemäß einer weiteren Ausführungsform umfasst das Verfahren ferner den Schritt:
optisches Überprüfen mindestens einer der Gruppen von Webinterfaces, deren grafische Darstellungen auf dem Bildschirm angezeigt sind.

Das optische Überprüfen bezieht sich insbesondere auf ein Überprüfen der grafischen Darstellungen der Webinterfaces, die einer gemeinsamen Gruppe von Webinterfaces zugeordnet sind. Das optische Überprüfen umfasst beispielsweise ein Erfassen einer Versionsnummer des jeweiligen Webinterfaces, ein Erfassen eines potentiellen Sicherheitsrisikos und ein Erfassen einer Sicherheitslücke. Insbesondere kann das Überprüfen ein Zugreifen auf mindestens eine der Netzwerkeinrichtungen mit Hilfe eines jeweiligen Hyperlinks umfassen.

Gemäß einer weiteren Ausführungsform umfasst das Verfahren ferner den Schritt:
Ausblenden einer optisch überprüften Gruppe von Webinterfaces.

Durch das Ausblenden einer oder mehrerer bereits überprüften Gruppen von Webinterfaces kann eine verbesserte Übersichtlichkeit auf dem Bildschirm geschaffen werden.

Gemäß einer weiteren Ausführungsform enthalten die grafischen Darstellungen der Webinterfaces Zeichen, Muster, Bilder und/oder Bereiche mit voneinander verschiedenen Farben.

Gemäß einer weiteren Ausführungsform umfasst das Verfahren ferner den Schritt:
Verändern einer Größe der grafischen Darstellung zumindest eines der Webinterfaces auf dem Bildschirm, wobei die Größe der grafischen Darstellung durch eine Anzahl von Pixeln, die die grafischen Darstellungen auf dem Bildschirm umfassen, bestimmt wird.

Beispielsweise gibt eine Anzahl von Pixeln entlang jeder Achse der grafischen Darstellung des Webinterfaces an, wie groß die grafische Darstellung ist. Die Größe der grafischen Darstellungen der Webinterfaces kann variiert werden, indem die Anzahl von Pixeln reduziert oder vergrößert wird, und die Farbwerte interpoliert und/oder approximiert werden.

Gemäß einer weiteren Ausführungsform werden mehrere Gruppen von Webinterfaces, deren jeweiliges Ähnlichkeitsmaß höher als ein Schwellwert für das Ähnlichkeitsmaß ist, überlappend angezeigt.

Dadurch kann hervorgehoben und auf den ersten Blick erkannt werden, welche Gruppen von Webinterfaces besonders ähnlich zueinander sind. Das Überlappen von Gruppen kann sich auf ein Berühren und/oder zusammenfließen von Umrandungen und/oder verfärbten Bereichen der Gruppen beziehen. Insbesondere können zwei Gruppen derart zueinander ähnlich sein, dass ein Abstand zwischen den zwei Gruppen kleiner als eine Größe einer dieser zwei Gruppen ist, so dass die zwei Gruppen überlappend angeordnet sind. Dabei kann sich die Größe der Gruppe auf einen Flächeninhalt der Umrandung und/oder des verfärbten Bereichs der Gruppe beziehen.

Gemäß einem zweiten Aspekt wird ein Netzwerk mit mehreren Netzwerkeinrichtungen vorgeschlagen. Das Netzwerk ist umfasst einen Bildschirm und eine Recheneinheit. Die Recheneinheit ist zum Ausführen des vorgeschlagenen Verfahrens eingerichtet.

Die jeweilige Einheit, zum Beispiel die Recheneinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als mobile Recheneinheit ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für das Verfahren vorgeschlagenen beschriebenen Ausführungsformen und Merkmale gelten für das vorgeschlagene Netzwerk entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt schematisch ein Ausführungsbeispiel eines Netzwerks;
Fig. 2 zeigt ein Ablaufdiagramm eines Verfahrens zum Überprüfen von Netzwerkeinrichtungen in einem Netzwerk;
Fig. 3 zeigt schematisch das Erfassen von Netzwerkadressen der Netzwerkeinrichtungen mit Hilfe einer Servereinrichtung;
Fig. 4 zeigt schematisch das Abrufen der Webinterfaces der Netzwerkeinrichtungen von einer Recheneinheit aus;
Fig. 5 zeigt schematisch grafische Darstellungen von mehreren Gruppen von Webinterfaces auf einem Bildschirm;
Fig. 6 zeigt schematisch grafische Darstellungen von Webinterfaces auf dem Bildschirm;
Fig. 7 zeigt schematisch ein erstes Ausführungsbeispiel einer Anordnung von Gruppen von Webinterfaces in einer Anzeigeeinrichtung; und
Fig. 8 zeigt schematisch ein zweites Ausführungsbeispiel einer Anordnung von Gruppen von Webinterfaces in einer Anzeigeeinrichtung.

In den Figuren sind gleiche oder funktionsgleiche Elemente mit denselben Bezugszeichen versehen worden, sofern nichts anderes angegeben ist.

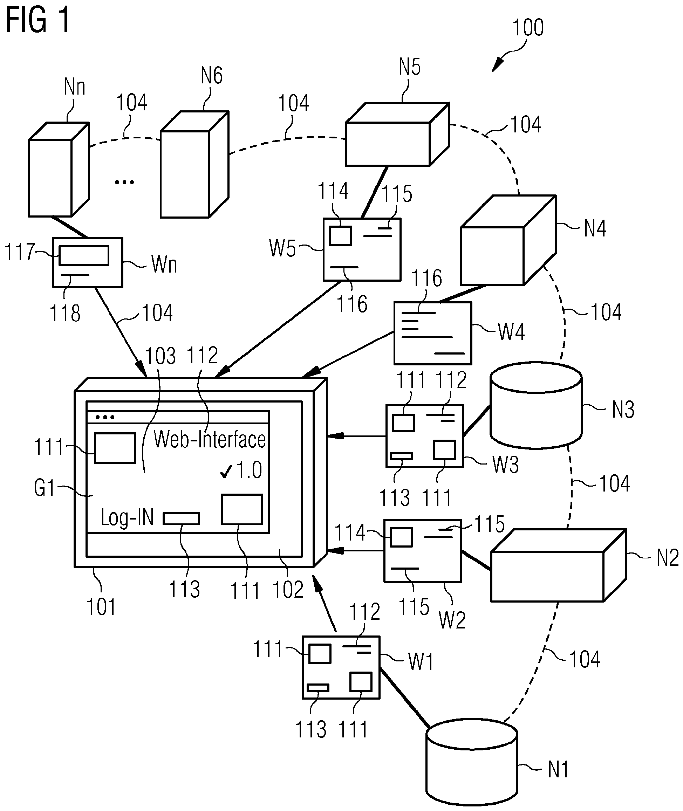

Fig. 1 zeigt schematisch ein Ausführungsbeispiel eines Netzwerks 100.

Das Netzwerk 100 ist beispielsweise ein Intranet eines Unternehmens oder ein Teil eines Intranets eines Unternehmens. In einem anderen Beispiel ist das Netzwerk 100 ein Teil eines globalen Netzwerks von Rechnern, insbesondere des Internets.

Das Netzwerk 100 umfasst mehrere Netzwerkeinrichtungen N1 - Nn, die miteinander vernetzt sind, d.h. derart miteinander gekoppelt sind, dass ein Datentransfer zwischen den Netzwerkeinrichtungen N1 - Nn erfolgen kann. Die Vernetzung der Netzwerkeinrichtungen N1 - Nn ist durch gestrichelte Linien 104 schematisch dargestellt. Insbesondere ist das Netzwerk 100 Teil eines größeren Netzwerks, das mehr Netzwerkeinrichtungen als die in Fig. 1 gezeigten Netzwerkeinrichtungen N1 - Nn umfasst. Alternativ oder zusätzlich kann mindestens eine der Netzwerkeinrichtungen N1 - Nn des Netzwerks 100 ein Unternetzwerk mit mehreren weiteren, miteinander vernetzten Netzwerkeinrichtungen (nicht gezeigt) umfassen.

Ferner ist eine Recheneinheit 101 mit dem Netzwerk 100 gekoppelt oder Teil des Netzwerks 100. Die Recheneinheit 101 kann mit den Netzwerkeinrichtungen N1 - Nn direkt oder indirekt wechselwirken. Beim Abrufen der Netzwerkeinrichtungen N1 - Nn wird das jeweilige Webinterface W1 - Wn auf einem Bildschirm 102 der Recheneinheit 101 grafisch dargestellt.

Die Netzwerkeinrichtungen N1 - Nn sind über ein jeweiliges Webinterface W1 - Wn ansteuerbar, wobei zumindest ein Teil der Netzwerkeinrichtungen N1 - Nn, wie z.B. die Netzwerkeinrichtung N6, mit keinem Webinterface ausgestattet sein kann. Daher kann eine Anzahl der abrufbaren Webinterfaces von n Netzwerkeinrichtungen kleiner als n sein. Das jeweilige Webinterface W1 - Wn ist insbesondere eine grafische Benutzerschnittstelle. Das Webinterface W1 - Wn ermöglicht ein Ansteuern, eine Konfiguration und/oder eine Modifikation der jeweiligen Netzwerkeinrichtung N1 - Nn. Die Netzwerkeinrichtungen N1, N3 sind jeweils eine Datenbankeinrichtung. Die Netzwerkeinrichtungen N2, N5 sind jeweils eine Steuereinheit eines Feldgerätes. Die Netzwerkeinrichtung N4 ist ein Drucker. Die Netzwerkeinrichtung N6 ist ein Rechner. Die Netzwerkeinrichtung Nn ist eine Sensoreinrichtung.

Die Webinterfaces W1 - W5 weisen jeweils mehrere verschiedene grafische Elemente auf. Die Webinterfaces W1, W3 weisen jeweils zwei Bildelemente 111, ein Textelement 112 sowie ein Texteingabefeld 113 auf. Die Webinterfaces W2, W5 weisen jeweils ein Bildelement 114 und ein Textelement 115 auf. Das Webinterface W4 weist mehrere Textelemente 116 auf. Das Webinterface Wn weist eine Anzeigefläche 117 und ein Textelement 118 auf.

Die Webinterfaces W1 - Wn sind lokal bei den jeweiligen Netzwerkeinrichtungen N1 - Nn elektronisch gespeichert. Insbesondere sind die Webinterfaces W1 - Wn in Form eines jeweiligen HTML-Quellcodes gespeichert, der beim Ansprechen der Netzwerkeinrichtung N1 - Nn von einer Browsereinrichtung geladen wird. Insbesondere umfassen die HTML-Quellcodes der Webinterfaces W1 - Wn eine jeweilige Position der Text- und Bildelemente 111 - 118 sowie ihren Inhalt, wie sie in Fig. 1 schematisch dargestellt sind. Das Speichern erfolgt insbesondere auf einer lokalen Speichereinrichtung der Recheneinheit 101.

Basierend auf dem jeweiligen HTML-Quellcode wird das abgerufene Webinterface W1 - Wn in einem Anzeigefenster 103 der Browsereinrichtung angezeigt. Fig. 1 zeigt eine grafische Darstellung G1 des Webinterfaces W1 der Netzwerkeinrichtung N1 im Fenster 103 der Browsereinrichtung auf dem Bildschirm 102. Die Bilderelemente 111 sind jeweils an den Ecken oben links und unten rechts im Fenster 103 positioniert und zeigen ein Logo des Webinterfaces sowie ein kennzeichnendes Bild für die Netzwerkeinrichtung N1. Das Textelement 112 gibt den Namen der Netzwerkeinrichtung N1, den Typ des Webinterfaces W1 sowie eine Versionsnummer des Webinterfaces W1 an. In das Texteingabefeld 113 können ein Passwort und ein Login-Name eingegeben werden.

Mit Hilfe der grafischen Darstellung G1 des Webinterfaces W1 kann auf die zugehörige Netzwerkeinrichtung N1 zugegriffen werden. Dadurch können Informationen über die und von der Netzwerkeinrichtung N1 auf dem Bildschirm 102 wiedergegeben werden, die Netzwerkeinrichtung N1 konfiguriert, betrieben und angesteuert werden.

Für eine Sicherheitsüberprüfung der Netzwerkeinrichtung N1 wird die Versionsnummer des Webinterfaces W1 im Textfeld 112 auf Aktualität überprüft, in das Login-Feld im Texteingabefeld 113 das Standardpasswort sowie der Standard-Login-Name eingegeben und nach anfälligen Textteilen oder Bildelementen gesucht.

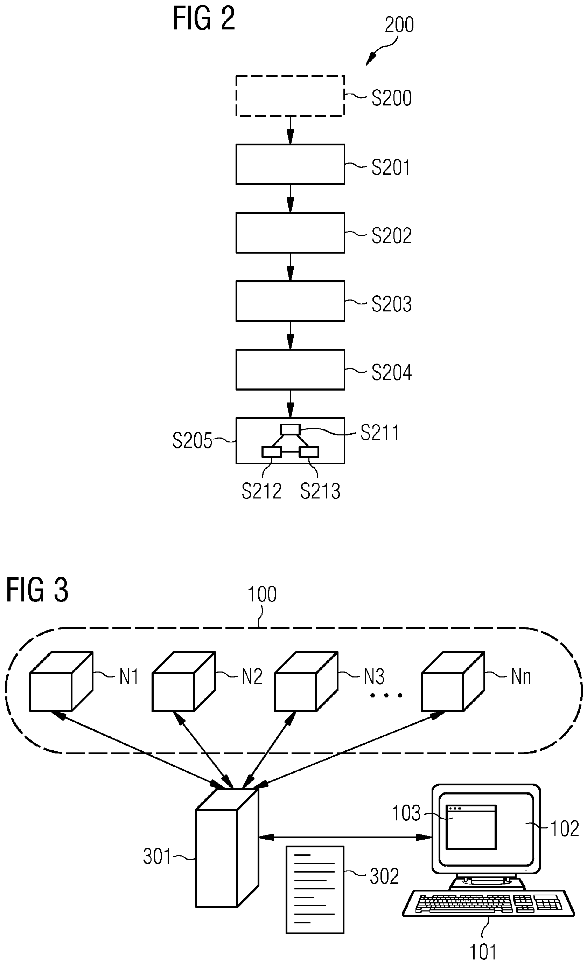

Fig. 2 zeigt ein Ablaufdiagramm 200 eines Verfahrens zum Überprüfen von Netzwerkeinrichtungen in einem Netzwerk. Insbesondere zeigt das Ablaufdiagramm 200 das Verfahren zum Überprüfen der Netzwerkeinrichtungen N1 - Nn in dem Netzwerk 100 in Fig. 1.

In einem vorgelagerten Schritt S200 wird das Netzwerk 100 mit den Netzwerkeinrichtungen N1 - Nn, wie es in Fig. 1 dargestellt ist, bereitgestellt.

Optional umfasst das Netzwerk 100 eine Servereinrichtung 301, wie in Fig. 3 schematisch dargestellt ist, die mit den Netzwerkeinrichtungen N1 - Nn des Netzwerks 100 gekoppelt ist und Anschlüsse im Netzwerk 100 überprüft. Zusätzlich oder alternativ dazu kann die Recheneinheit 101 die Anschlüsse im Netzwerk 100 überprüfen. Das Netzwerk 100 umfasst n Netzwerkeinrichtungen N1 - Nn. Basierend auf den Verbindungen an den Anschlüssen erstellt die Servereinrichtung 301 eine Netzwerkadressen-Liste 302 von Netzwerkeinrichtungen N1 - Nn, die im Netzwerk 100 registriert sind. Dabei kann mindestens ein Teil der Netzwerkeinrichtungen N1 - Nn über ein jeweiliges Webinterface W1 - Wn ansteuerbar sein.

In einem ersten Schritt S201 des Verfahrens zum Überprüfen der Netzwerkeinrichtungen N1 - Nn werden die Webinterfaces W1 - Wn abgerufen. Insbesondere kann das Abrufen der Webinterfaces W1 - Wn mit Hilfe der Netzwerkadressen-Liste 302 erfolgen, wie in Fig. 3 dargestellt.

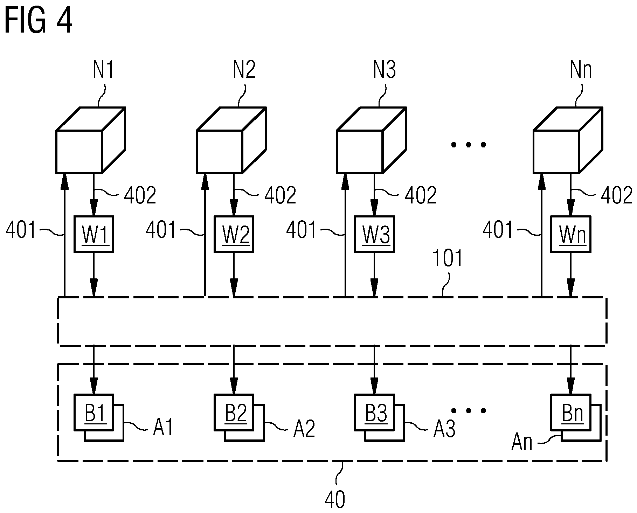

Fig. 4 illustriert, dass die Recheneinheit 101 die Netzwerkeinrichtungen N1 - Nn anspricht (dargestellt durch einen jeweiligen Pfeil 401). Die Netzwerkeinrichtungen N1 - Nn geben das jeweilige Webinterface W1 - Wn als Antwort zurück, wie durch einen jeweiligen Pfeil 402 dargestellt.

Als Ergebnis wird das jeweilige Webinterface W1 - Wn abgerufen. Die Webinterfaces W1 - Wn werden grafisch dargestellt ("gerendert"), ohne dass sie am Bildschirm 102 angezeigt werden. Stattdessen wird in einem nächsten Schritt S202 (vgl. Fig. 2) ein jeweiliger Bilddatensatz B1 - Bn für die abgerufenen Webinterfaces W1 - Wn erzeugt, der eine jeweilige zu erwartende grafische Darstellung der Webinterfaces W1 - Wn umfasst. Dabei werden die Bilddatensätze B1 - Bn in einem BMP- oder JPEG-Format erstellt und/oder gespeichert. Die grafischen Darstellungen beziehen sich dabei auf ein Fenster der Browsereinrichtung 103. Die Bilddatensätze B1 - Bn werden zusammen mit einer jeweiligen Netzwerkadresse A1 - An der Netzwerkeinrichtungen N1 - Nn in einer Speichereinrichtung 403, die lokal in der Recheneinheit 101 und/oder zentral im Netzwerk 100 installiert ist, gespeichert.

In einem nächsten Schritt S203 werden die abgerufenen Webinterfaces W1 - Wn in Gruppen geordnet. Dabei wird ein grafisches Ähnlichkeitsmaß für die grafischen Darstellungen der abgerufenen Webinterfaces W1 - Wn ermittelt. Das grafische Ähnlichkeitsmaß wird mit Hilfe des jeweiligen Bilddatensatzes ermittelt. Beispielsweise wird das grafische Ähnlichkeitsmaß durch einen pixelbasierten Vergleich von grafischen Darstellungen oder ein Histogramm-basiertes Verfahren (z.B. histogram-based image segmentation) ermittelt. Vorzugsweise wird ein kantenorientiertes Verfahren verwendet, bei dem zunächst Kanten einer jeweiligen grafischen Darstellung erfasst werden. Die erfassten Kanten werden miteinander verbunden, so dass ein Bereich der grafischen Darstellung darin eingeschlossen wird. Anschließend wird eine Verteilung von Farbwerten in dem eingeschlossenen Bereich ermittelt und mit Verteilungen der anderen grafischen Darstellungen verglichen. Stimmen die Verteilungen zweier grafischen Darstellungen miteinander überein, wird das Ähnlichkeitsmaß erhöht.

Grafische Darstellungen von Webinterfaces W1 - Wn, deren Ähnlichkeitsmaß höher als ein vorgegebener Schwellwert ist, werden jeweils in gemeinsame Gruppen geordnet. So werden die grafischen Darstellungen der Webinterfaces W1, W3 in eine gemeinsame Gruppe geordnet. Dabei können sich die grafischen Darstellungen nur in einer Position oder einem Inhalt eines Textelements und/oder Bildelements 111 - 1187 unterscheiden. Vorzugsweise sind die Netzwerkeinrichtungen N1 - Nn, die einer gemeinsamen Gruppe geordnet sind, elektronische Systeme gleichen Typs, z.B. Steuereinheiten einer jeweiligen Maschine, Druckereinrichtungen oder Feldgeräte.

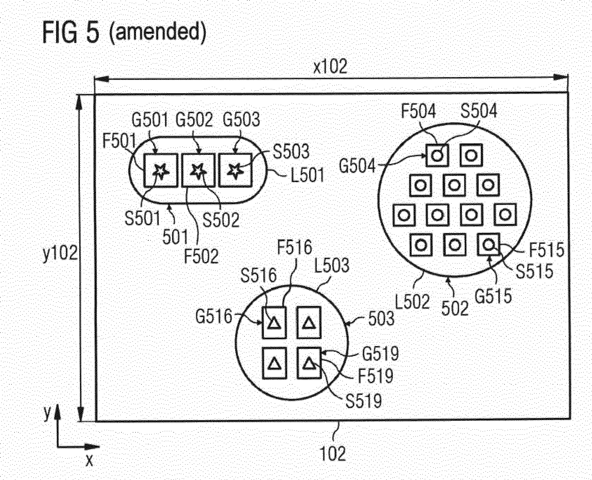

In einem nächsten Schritt S204 werden die grafischen Darstellungen der Webinterfaces W1 - Wn mindestens einer der Gruppen von Webinterfaces auf dem Bildschirm 102 angezeigt. Der Bildschirm 102 weist eine rechteckige Bildschirmfläche auf, die Abmessungen x102, y102 jeweils in x- und y-Richtung aufweist, wie in Fig. 5 dargestellt. Insbesondere werden die grafischen Darstellungen G501 - G 519 der Webinterfaces W1 - Wn, die in den Gruppen geordnet sind, auf dem Bildschirm 102 der Recheneinheit 101 angezeigt.

Fig. 5 zeigt schematisch grafische Darstellungen G501 - G519 von abgerufenen Webinterfaces W501 - W519. Die grafischen Darstellungen G501 - G509 sind in drei Gruppen 501 - 503 von Webinterfaces geordnet und auf dem Bildschirm 102 angezeigt. Die Webinterfaces W501 - W519 werden in einem jeweiligen rechteckigen Fenster F501 - F519, das dem Fenster 103 der Browsereinrichtung entspricht, angezeigt, wie in Fig. 5 schematisch dargestellt. Optische Ähnlichkeit von Webinterfaces W1 - Wn liegt vorzugsweise darin, dass die jeweilige Position und/oder der jeweilige Inhalt der Text- und Bildelemente 111 - 118 der Webinterfaces W1 - Wn Gemeinsamkeiten aufweisen.

Eine erste Gruppe 501 von Webinterfaces umfasst die grafischen Darstellungen G501 - G503 von Webinterfaces W501 - W503. Die grafischen Darstellungen G501 - G503 enthalten jeweils einen Inhalt, der durch einen jeweiligen Stern S501 - S503 dargestellt ist. Die Inhalte S501 - S503 sind optisch zueinander ähnlich. Beispielsweise umfassen die grafischen Darstellungen G501 - G503 eine jeweilige grafische Darstellung der Webinterfaces W1, W3.

Eine zweite Gruppe 502 von Webinterfaces umfasst die grafischen Darstellungen G504 - G515 von Webinterfaces W504 - W515. Die grafischen Darstellungen G504 - G515 enthalten jeweils einen Inhalt, der durch einen jeweiligen Kreis S504 - S515 dargestellt ist. Die Inhalte S504 - S515 sind optisch zueinander ähnlich. Beispielsweise umfassen die grafischen Darstellungen G504 - G515 eine jeweilige grafische Darstellung der Webinterfaces W2, W5.

Eine dritte Gruppe 503 von Webinterfaces umfasst die grafischen Darstellungen G516 - G519 von Webinterfaces W516 - W519. Die grafischen Darstellungen G516 - G519 enthalten jeweils einen Inhalt, der durch ein jeweiliges Dreieck S516 - S519 dargestellt ist. Die Inhalte S516 - S519 sind optisch zueinander ähnlich.

Wie es in Fig. 5 gezeigt ist, ist die Anzahl von grafischen Darstellungen G504 - G515 in den Gruppen 501 - 503 von Webinterfaces unterschiedlich. Die erste Gruppe 501 umfasst drei grafische Darstellungen G501 - G503, die zweite Gruppe 502 umfasst dreizehn grafische Darstellungen G504 - G515, und die dritte Gruppe 503 umfasst vier grafische Darstellungen G516 - G519.

Die Gruppen 501 - 503 sind voneinander beabstandet, mit einer jeweiligen Linie L501 - L503 umrandet und innerhalb einer jeweiligen Umrandung L501 - L503 mit einer Farbe versehen, die einen Kontrast zu einer Hintergrundfarbe der Bildschirmfläche 102 bildet. Beispielsweise ist die Farbe innerhalb der Umrandungen L501 - L503 weiß, während die Hintergrundfarbe der Bildschirmfläche 102 hellblau ist.

In einem nächsten Schritt S205 werden die grafischen Darstellungen der Webinterfaces W1 - Wn, die auf dem Bildschirm 102 angezeigt werden, überprüft. Dadurch werden die jeweiligen Netzwerkeinrichtungen N1 - Nn überprüft. Das Überprüfen der grafischen Darstellungen umfasst ein Erkennen von False-Positives (S211), ein Erkennen von potentiellen Gefahrstellen (S212) und ein Ausblenden von bereits überprüften Gruppen von Webinterfaces (S213). Insbesondere umfasst das Überprüfen ein Zugreifen auf die Netzwerkeinrichtungen N1 - Nn mit Hilfe eines jeweiligen Hyperlinks, mit dem die grafische Darstellung des Webinterfaces W1 - Wn versehen ist. Die Hyperlinks werden insbesondere mit Hilfe der gespeicherten Netzwerkadressen A1 - An erzeugt.

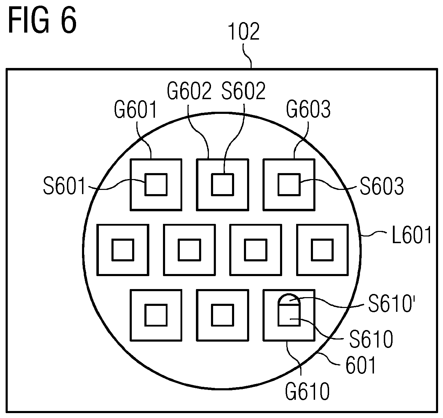

Fig. 6 zeigt schematisch grafische Darstellungen G601 - G610 von Webinterfaces W601 - W610 auf dem Bildschirm 102.

Die grafischen Darstellungen G601 - G610 sind einer Gruppe 601 zugeordnet, die mit einer Linie L601 umrandet ist. Der Inhalt in jeder der grafischen Darstellungen G601 - G610 wird jeweils mit einem Viereck S601 - S610 dargestellt.

Die grafische Darstellung G610 weist einen anderen Inhalt als die restlichen grafischen Darstellungen G601 - G609 auf, wie es durch einen Halbkreis S610' zusätzlich zu dem Viereck S610 dargestellt ist. Dadurch unterscheidet sich die grafische Darstellung G610 von den restlichen grafischen Darstellungen G601 - G609. Somit ist die grafische Darstellung G610 ein False-Positive, das fälschlicherweise der Gruppe 601 zugeordnet ist. Das Erkennen dieses False-Positives erfolgt auf den ersten Blick auf die grafischen Darstellungen G601 - G610 der Gruppe 601. Das Erkennen des False-Positives erfolgt somit schneller, als dass die einzelnen Webinterfaces W601 - W610 abgerufen werden.

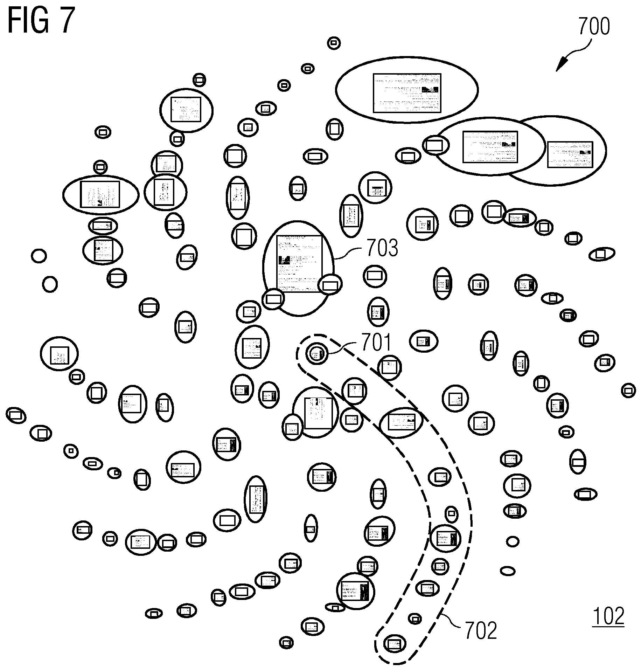

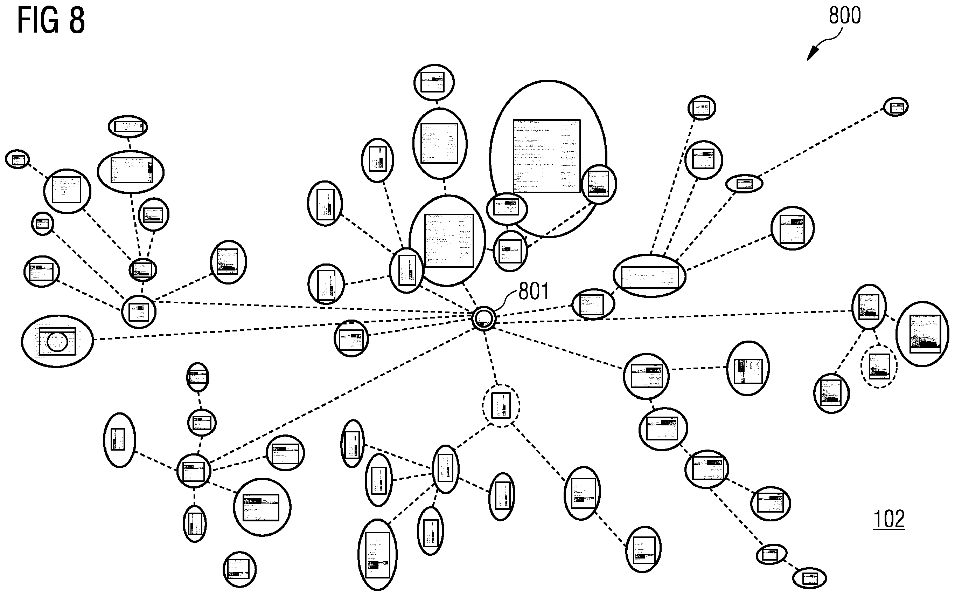

Fig. 7 und Fig. 8 zeigen schematisch jeweils ein erstes und zweites Ausführungsbeispiel einer Anordnung 700, 800 von Gruppen von Webinterfaces W1 - Wn.

In jeder Gruppe ist eine bestimmte Anzahl von grafischen Darstellungen der Webinterfaces W1 - Wn angeordnet. Jede Gruppe weist eine Umrandung auf, innerhalb welcher sich die Farbe von einer Farbe des Hintergrunds der Bildschirmfläche 102 unterscheidet.

In Fig. 7 sind die Gruppen spiralförmig, d.h. von einem Zentrum 701 aus in mehreren gleichförmigen Kurven nach außen verlaufend, angeordnet. Ein gekurvter Ast 702 von Gruppen ist beispielhaft für diese Kurven. Dabei sind manche der Gruppen, wie z.B. zusammengefasste Gruppen 703, überlappend angeordnet, um hervorzuheben, dass die grafischen Darstellungen in diesen Gruppen zwar nicht einer gemeinsamen Gruppe zugeordnet, dennoch optisch ähnlich zueinander sind. Im Zentrum 701 befindet sich eine grafische Darstellung eines Webinterfaces, das als Startpunkt definiert ist.

Alternativ oder zusätzlich können die Gruppen in Abhängigkeit von einem jeweiligen Ähnlichkeitsmaß zu dem Zentrum 701 angeordnet sein. Dabei bezieht sich das Ähnlichkeitsmaß auf die grafischen Darstellungen in der jeweiligen Gruppe und im Zentrum 701. Ein Abstand zwischen der jeweiligen Gruppe und dem Zentrum 701 ist umso kleiner, je größer das Ähnlichkeitsmaß zwischen den Gruppen und dem Zentrum 701 ist. Die Gruppen können in einem vorgegebenen Winkel voneinander beabstandet um das Zentrum 701 herum angeordnet werden, wobei mit zunehmendem Abstand von dem Zentrum 701 der vorgegebene Winkel stufenweise verringert wird. Auf diese Weise kann eine spiralförmige Anordnung der Gruppen von Webinterfaces, wie in Fig. 7, erzeugt werden.

In Fig. 8 sind die Gruppen in Abhängigkeit von dem Ähnlichkeitsmaß angeordnet und mit Hilfe von gestrichelten Linien miteinander gekoppelt auf der Bildschirmfläche 102 angezeigt. Zusammenhängende Gruppen werden nah beieinander angeordnet und mit einer gestrichelten Linie miteinander verbunden. Insgesamt entsteht ein Geflecht aus miteinander gekoppelten grafischen Darstellungen der Webinterfaces, welches einem neuronalen Netz ähnelt.

Bei den Anordnungen 700, 800 können die unterschiedlichen Gruppen mit Hilfe von Drag & Drop sowie Heran- und Herauszoomen vergrößert betrachtet werden. Bereits vom Benutzer überprüfte Gruppen können mit einem Mausklick ausgeblendet werden, z.B. indem die Umrandung und die Farbe innerhalb der Umrandung der jeweiligen Gruppe ausgeblendet werden. Es ist ferner denkbar, mehrere Ebenen von Gruppen von Webinterfaces bereitzustellen, wobei jeweils eine der mehreren Ebenen wahlweise angezeigt wird.

Insbesondere sind die grafischen Darstellungen von Webinterfaces W1 - Wn in den Anordnungen 700, 800 mit einem jeweiligen Hyperlink versehen. Mit einem Klick auf eine der grafischen Darstellungen wird das jeweilige Webinterface W1 - Wn aufgerufen. Dadurch ist ein schnelles Zugreifen auf die jeweilige Netzwerkeinrichtung N1 - Nn möglich.

Obwohl die vorliegende Erfindung anhand von Ausführungsbeispielen beschrieben wurde, ist sie vielfältig modifizierbar. Weitere Anordnungsmöglichkeiten der Gruppen von Webinterfaces sind denkbar, z.B. in einer Baum-Struktur, in einer GitterStruktur oder sternförmig. Mehrere Indexbilder (z.B. "Thumbnails") der grafischen Darstellung des jeweiligen Webinterfaces können erzeugt werden, die bei geeigneten Vergrößerungsstufen anstelle der grafischen Darstellungen angezeigt werden.

## Patentansprüche

1. Verfahren (200) zum Anzeigen grafischer Darstellungen (G501 - G610) von Webinterfaces (W1 - Wn) von Netzwerkeinrichtungen (N1 - Nn) in einem Netzwerk (100), welche mit Hilfe des jeweiligen Webinterfaces (W1 - Wn), welches eine grafische Benutzeroberfläche darstellt, ansteuerbar sind und eine jeweilige Netzwerkadresse (A1 - An) haben, auf einem Bildschirm (102) umfassend:
Abrufen (S201) der Webinterfaces (W1 - Wn) mit Hilfe der Netzwerkadressen (A1 - An);
Erzeugen (S202) eines Bilddatensatzes (B1 - Bn) für jedes abgerufene Webinterface (W1 - Wn), wobei der Bilddatensatz (B1 - Bn) die grafische Darstellung (G501 - G610) des Webinterfaces (W1 - Wn) in einer Anzeigeeinrichtung (103) umfasst;
Ordnen (S203) der abgerufenen Webinterfaces (W1 - Wn) in Gruppen (501 - 503), wobei die grafischen Darstellungen (G501 - G610) in der Anzeigeeinrichtung (103) der einer jeweiligen Gruppe (501 - 503) zugeordneten Webinterfaces (W1 - Wn) ein grafisches Ähnlichkeitsmaß aufweisen, wobei das grafische Ähnlichkeitsmaß angibt, wie viele Gemeinsamkeiten die grafische Darstellung (G501 - G610) eines bestimmten Webinterfaces (W1 - Wn) mit den grafischen Darstellungen (G501 - G610) von anderen Webinterfaces (W1 - Wn) aufweist und das grafische Ähnlichkeitsmaß mit Hilfe des jeweiligen Bilddatensatzes (B1 - Bn) ermittelt wird, und wobei die abgerufenen Webinterfaces (W1 - Wn) in eine gemeinsame Gruppe (501 - 503) zugeordnet werden, wenn ihr grafisches Ähnlichkeitsmaß einen vorgegebenen Schwellwert übersteigt; und
Anzeigen (S204) der grafischen Darstellungen (G501 - G610) der Webinterfaces (W1 - Wn) mindestens einer der Gruppen (501 - 503) auf dem Bildschirm (102) mit einer Bildschirmfläche (x102, y102),
wobei die grafischen Darstellungen (G501 - G610) der Webinterfaces (W1 - Wn) derart verkleinert angezeigt werden, dass die grafischen Darstellungen (G501 - G610) der Webinterfaces (W1 - Wn) einer Gruppe (501 - 503) innerhalb der Bildschirmfläche (x102, y102) auf dem Bildschirm (102) zusammen angezeigt werden.

2. Verfahren nach Anspruch 1,
**dadurch gekennzeichnet,**
**dass** die grafischen Darstellungen (G501 - G610) der Webinterfaces (W1 - Wn), die in verschiedenen Gruppen (501 - 503) geordnet sind, auf dem Bildschirm (102) in Abhängigkeit von dem Ähnlichkeitsmaß voneinander beabstandet angezeigt werden.

3. Verfahren nach Anspruch 1 oder 2,
**dadurch gekennzeichnet,**
**dass** die grafischen Darstellungen (G501 - G610) der Webinterfaces (W1 - Wn) auf dem Bildschirm (102) mit einem jeweiligen Hyperlink versehen werden, mittels welchem das jeweilige Webinterface (W1 - Wn) abrufbar ist.

4. Verfahren nach einem der Ansprüche 1 - 3,
**dadurch gekennzeichnet,**
**dass** das Netzwerk (100) ein Rechnernetz, ein Intranet und/oder ein Internet mit einem Netzwerkprotokoll umfasst.

5. Verfahren nach einem der vorhergehenden Ansprüche,
**dadurch gekennzeichnet,**
**dass** die Netzwerkeinrichtungen (N1 - Nn) Maschinen, Geräte, EDV-Einrichtungen, Rechner, Drucker, Servereinrichtungen, Router, Switches, Bridges, Firewalls und/oder Session Border Controllers umfassen.

6. Verfahren nach einem der vorhergehenden Ansprüche,
**dadurch gekennzeichnet,**
**dass** das Netzwerk (100) ferner zumindest eine weitere Netzwerkeinrichtung ohne jeweiliges Webinterface aufweist.

7. Verfahren nach einem der vorhergehenden Ansprüche,
**dadurch gekennzeichnet,**
**dass** der jeweilige Bilddatensatz (B1 - Bn) in einem Bitmap-Format gespeichert wird.

8. Verfahren nach einem der vorhergehenden Ansprüche, ferner umfassend:
Ausführen eines Mustererkennungsverfahrens mit den grafischen Darstellungen (G501 - G610) der Webinterfaces (W1 - Wn) .

9. Verfahren nach einem der vorhergehenden Ansprüche,
**dadurch gekennzeichnet,**
**dass** die Gruppen (501 - 503) von Webinterfaces (W1 - Wn) mit Hilfe einer Verfärbung gegenüber einer Hintergrundfarbe und/oder einer Umrandung auf dem Bildschirm (102) gekennzeichnet werden.

10. Verfahren nach einem der vorhergehenden Ansprüche, ferner umfassend:
optisches Überprüfen (S205) mindestens einer der Gruppen (501 - 503) von Webinterfaces (W1 - Wn), deren grafische Darstellungen (G501 - G610) auf dem Bildschirm (102) angezeigt sind; und
Ausblenden (S2123) einer optisch überprüften Gruppe (501 - 503) von Webinterfaces (W1 - Wn).

11. Verfahren nach einem der vorhergehenden Ansprüche,
**dadurch gekennzeichnet,**
**dass** die grafischen Darstellungen (G501 - G610) der Webinterfaces (W1 - Wn) Zeichen, Texte, Muster, Bilder und/oder Bereiche mit voneinander verschiedenen Farben enthalten.

12. Verfahren nach einem der vorhergehenden Ansprüche, ferner umfassend:
Verändern einer Größe der grafischen Darstellung (G501 - G610) zumindest eines der Webinterfaces (W1 - Wn) auf dem Bildschirm (102), wobei die Größe der grafischen Darstellung (G501 - G610) durch eine Anzahl von Pixeln, die die jeweilige grafische Darstellung auf dem Bildschirm (102) umfasst, bestimmt wird.

13. Verfahren nach einem der vorhergehenden Ansprüche,
**dadurch gekennzeichnet,**
**dass** mehrere Gruppen (501 - 503) von Webinterfaces (W1 - Wn), deren jeweiliges Ähnlichkeitsmaß höher als der Schwellwert für das Ähnlichkeitsmaß ist, überlappend angezeigt werden.

14. Netzwerk (100) mit mehreren Netzwerkeinrichtungen (101, N1 - N6), einem Bildschirm (102) und einer Recheneinheit (101), welche dazu eingerichtet ist, das Verfahren nach einem der vorhergehenden Ansprüche auszuführen.

## Claims

1. Method (200) for displaying graphical representations (G501 - G610) of web interfaces (W1 - Wn) of network elements (N1 - Nn) in a network (100) which can be activated with the aid of the respective web interface (W1 - Wn), which represents a graphic user interface, and have a respective network address (A1 - An), on a screen (102) comprising:
calling up (S201) the web interfaces (W1 - Wn) with the aid of the network addresses (A1 - An);
generating (S202) an image record (B1 - Bn) for each web interface (W1 - Wn) called up, the image record (B1 - Bn) comprising the graphical representation (G501 - G610) of the web interface (W1 - Wn) on a display device (103);
ordering (S203) the web interfaces (W1 - Wn) called up in groups (501 - 503), the graphical representations (G501 - G610) on the display device (103) of the web interfaces (W1 - Wn) allocated to a respective group (501 - 503) having a graphical measure of similarity the graphical measure of similarity indicating how many commonalities the graphical representation (G501 - G610) of a specific web interface (W1 - Wn) has with the graphical representations (G501 - G610) of other web interfaces (W1 - Wn), and the graphical measure of similarity being determined with the aid of the respective image record (B1 - Bn), and the web interfaces (W1 - Wn) called up being allocated into a common group (501 - 503) when their graphical measure of similarity exceeds a predetermined threshold value; and
displaying (S204) the graphical representations (G501 - G610) of the web interfaces (W1 - Wn) of at least one of the groups (501 - 503) on the screen (102) having a screen surface (x102, y102),
the graphical representations (G501 - G610) of the web interfaces (W1 - Wn) being displayed scaled down in such a manner that the graphical representations (G501 - G610) of the web interfaces (W1 - Wn) of a group (501 - 503) are displayed together inside the screen surface (x102, y102) on the screen (102) .

2. Method according to Claim 1, **characterized in that** the graphical representations (G501 - G610) of the web interfaces (W1 - Wn), which are ordered in various groups (501 - 503) are displayed spaced apart from one another in dependence on the measure of similarity on the screen (102).

3. Method according to Claim 1 or 2, **characterized in that** the graphical representations (G501 - G610) of the web interfaces (W1 - Wn) on the screen (102) are provided with a respective hyperlink by means of which the respective web interface (W1 - Wn) can be called up.

4. Method according to one of Claims 1 - 3, **characterized in that** the network (100) comprises a computer network, an intranet and/or an Internet with a network protocol.

5. Method according to one of the preceding claims, **characterized in that** the network elements (N1 - Nn) comprise machines, devices, EDP devices, computers, printers, server devices, routers, switches, bridges, firewalls and/or session border controllers.

6. Method according to one of the preceding claims, **characterized in that** the network (100) also has at least one further network element without respective web interface.

7. Method according to one of the preceding claims, **characterized in that** the respective image record (B1 - Bn) is stored in a bit map format.

8. Method according to one of the preceding claims, also comprising:
executing a pattern recognition method with the graphical representations (G501 - G610) of the web interfaces (W1 - Wn).

9. Method according to one of the preceding claims, **characterized in that** the groups (501 - 503) of web interfaces (W1 - Wn) are identified with the aid of a discoloration compared with a background color and/or a border on the screen (102) .

10. Method according to one of the preceding claims, also comprising:
optical checking (S205) of at least one of the groups (501 - 503) of web interfaces (W1 - Wn), the graphical representations of which (G501 - G610) are displayed on the screen (102); and
masking out (S2123) of an optically checked group (501 - 503) of web interfaces (W1 - Wn).

11. Method according to one of the preceding claims, **characterized in that** the graphical representations (G501 - G610) of the web interfaces (W1 - Wn) contain characters, texts, patterns, images and/or areas of colors different from one another.

12. Method according to one of the preceding claims, also comprising:
changing a size of the graphical representation (G501 - G610) of at least one of the web interfaces (W1 - Wn) on the screen (102), the size of the graphical representation (G501 - G610) being determined by a number of pixels comprised by the respective graphical representation on the screen (102).

13. Method according to one of the preceding claims, **characterized in that** several groups (501 - 503) of web interfaces (W1 - Wn), the respective measure of similarity of which is higher than a threshold value for the measure of similarity, are displayed in an overlapping manner.

14. Network (100) having a number of network elements (101,N1 - N6), a screen (102) and a computer unit (101) which is set up to execute the method according to one of the preceding claims.

## Revendications

1. Procédé (200) de visualisation de représentations graphiques (G501 - G610) d'interfaces web (W1 - Wn) de dispositifs de réseau (N1 - Nn) dans un réseau (100) sur un écran (102), lesquelles peuvent être commandées à l'aide de l'interface web (W1 - Wn) respective, qui représente une surface d'utilisateur graphique, et disposent chacune d'une adresse de réseau (A1 - An), comprenant:
l'appel (S201) des interfaces web (W1 - Wn) à l'aide des adresses de réseau (A1 - An);
la production (S202) d'un enregistrement d'image (B1 - Bn) pour chaque interface web (W1 - Wn) appelée, l'enregistrement d'image (B1 - Bn) comprenant la représentation graphique (G501 - G610) de l'interface web (W1 - Wn) dans un dispositif d'affichage (103);
le classement (S203) des interfaces web (W1 - Wn) appelées en groupes (501 - 503), les représentations graphiques (G501 - G610) présentant dans le dispositif d'affichage (103) des interfaces web (W1 - Wn) associées à un groupe (501 - 503) respectif, un degré de similitude graphique, le degré de similitude graphique indiquant combien de similitudes la représentation graphique (G501 G610) d'une certaine interface web (W1 - Wn) possède avec les représentations graphiques (G501 - G610) d'autres interfaces web (W1 - Wn) et le degré de similitude graphique étant déterminé à l'aide de l'enregistrement d'image (B1 - Bn) respectif, et les interfaces web (W1 - Wn) appelées étant associées dans un groupe commun (501 - 503) quand leur degré de similitude graphique dépasse positivement une valeur de seuil prédéfinie; et
la visualisation (S204) des représentations graphiques (G501 - G610) des interfaces web (W1 - Wn) d'au moins un des groupes (501 - 503) sur l'écran (102) avec une surface d'écran (x102, y102),
les représentations graphiques (G501 - G610) des interfaces web (W1 - Wn) étant visualisées réduites de sorte que les représentations graphiques (G501 - G610) des interfaces web (W1 - Wn) d'un groupe (501 - 503) sont toutes visualisées à l'intérieur de la surface d'écran (x102, y102) sur l'écran (102).

2. Procédé selon la revendication 1,
**caractérisé en ce que**
les représentations graphiques (G501 - G610) des interfaces web (W1 - Wn), classées en différents groupes (501 - 503) sont visualisées sur l'écran (102) espacées l'une de l'autre en fonction du degré de similitude.

3. Procédé selon la revendication 1 ou 2,
**caractérisé en ce que**
les représentations graphiques (G501 - G610) des interfaces web (W1 - Wn) sur l'écran (102) sont munies d'un lien hypertexte respectif au moyen duquel l'interface web (W1 - Wn) respective, peut être appelée.

4. Procédé selon l'une des revendications 1-3,
**caractérisé en ce que**
le réseau (100) comprend un réseau informatique, un Intranet et/ou un Internet avec un protocole de réseau.

5. Procédé selon l'une des revendications précédentes,
**caractérisé en ce que**
les dispositifs de réseau (N1 - Nn) comprennent des machines, des appareils, des dispositifs de traitement électronique des données, des ordinateurs, des imprimantes, des dispositifs serveurs, des routeurs, des commutateurs, des ponts, des parefeux et/ou des contrôleurs de session en périphérie.

6. Procédé selon l'une des revendications précédentes,
**caractérisé en ce que**
le réseau (100) possède en outre au moins un autre dispositif de réseau sans interface web respective.

7. Procédé selon l'une des revendications précédentes, **caractérisé en ce que** l'enregistrement d'image (B1 - Bn) respectif est stocké sous un format Bitmap.

8. Procédé selon l'une des revendications précédentes, comprenant en outre:
l'exécution d'un procédé de reconnaissance de figure avec les représentations graphiques (G501 - G610) des interfaces web (W1 - Wn).

9. Procédé selon l'une des revendications précédentes,
**caractérisé en ce que**
les groupes (501 - 503) d'interfaces web (W1 - Wn) sont caractérisées à l'aide d'une coloration contre une couleur d'arrière-fond et/ou d'un bord sur l'écran (102).

10. Procédé selon l'une des revendications précédentes, comprenant en outre:
une évaluation optique (S205) d'au moins un des groupes (501 - 503) d'interfaces web (W1 - Wn) dont les représentations graphiques (G501 - G610) sont visualisées sur l'écran (102); et
le masquage (S2123) d'un groupe optiquement évalué (501 - 503) d'interfaces web (W1 - Wn).

11. Procédé selon l'une des revendications précédentes,
**caractérisé en ce que**
les représentations graphiques (G501 - G610) des interfaces web (W1 - Wn) contiennent des dessins, des textes, des figures, des images et/ou des zones de couleurs différentes les unes des autres.

12. Procédé selon l'une des revendications précédentes, comprenant en outre:
la modification d'une dimension de la représentation graphique (G501 - G610) d'au moins une des interfaces web (W1 - Wn) sur l'écran (102), la dimension de la représentation graphique (G501 - G610) étant déterminée par un nombre de pixels, qui comprend la représentation graphique respective sur l'écran (102).

13. Procédé selon l'une des revendications précédentes,
**caractérisé en ce que**
plusieurs groupes (501 - 503) d'interfaces web (W1 - Wn) dont le degré de similitude respectif est plus élevé que la valeur de seuil du degré de similitude, se visualisent par chevauchement.

14. Réseau (100) avec plusieurs dispositifs de réseau (101, N1 - N6), un écran (102) et une unité de calcul (101), laquelle est configurée pour exécuter le procédé selon l'une des revendications précédentes.
